# EUROPEAN PATENT APPLICATION

(11) **EP 1 829 604 A1**
(43) Date of publication of application: **05.09.2007**
(21) Application number: 05803976.9
(22) Date of filing: 17.10.2005
(51) Int. Cl.: B01D 71/02

(54) **COMPOSITE OXYGEN CONDUCTIVE MEMBRANE**

(30) Priority: 25.10.2004 RU 2004130965
(71) Applicant: Limited Liability Company "United Research and Development Centre", Moscow 119333 (RU)
(72) Inventor: MORDKOVICH, Vladimir Zalmanovich, 117209 Moscow (RU); KHARITONOV, Dmitry Nikolaevich, 117246 Moscow (RU); AVETISOV, Alexandr Konstantinovich, 117219 Moscow (RU); BAICHTOK, Yulu Kivovich, 123154 Moscow (RU); POLITOVA, Ekaterina Dmitrievna, 125319 Moscow (RU); DUDAKOVA, Nataliya Vladimirovna, 107589, Moscow (RU); SUVORKIN, Sergei Vyacheslavovich, Moskovskaya obl., 144007 (RU); KOSAREV, Gennady Vladimirovich, 111555, Moscow (RU)
(74) Representative: Andrae, Steffen
(86) International application number: PCT/RU2005/000510
(87) International publication number: WO 2006/046886

(57) **Abstract**

The invention relates to membrane engineering, in particular to selective gas-proof membranes, The inventive composite oxygen conductive membrane comprises a continuous ceramic layer (1) provided with an ion and/or electron conductivity and at least one gas-proof structure layer made of an alloy which contains elements of VIII and VI groups of the Mendeleev's Periodic Table and aluminum.

## Description

### Field of invention.

This invention relates to the area of membrane technologies and concerns separation of gases at membranes, in particular, at selective gas-tight membrane, in particular, at separation of oxygen-containing gases to recover oxygen and usage of the oxygen recovered in reactions of oxidative conversion of hydrogen-rich gas, in particular, for producing syngas from methane.

Prior knowledge.

Oxidative conversion of hydrocarbon gas with application of oxygen-permeable membranes is a promising direction of gas processing development.

Today the most commonly used method for hydrocarbon gas conversion is steam conversion at elevated pressures (15-40 bar) and temperatures (800-850°C) [Handbook of nitrogen operator, 2nd edition, revised. Moscow, Chemistry, 1986, 512 p.]. Disadvantages of this method include high energy consumption for reactor heating and for generation of high -pressure steam.

Conversion of hydrocarbons with application of partial oxidation method allows almost complete exclusion of energy consumption for reactor heating; more of it, the generated heat can be utilized [Handbook of nitrogen operator, 2nd edition, revised. Moscow, Chemistry,1986, 512 p.]. However, use of air as oxygen-containing gas results in the necessity of further utilization of nitrogen and other components of air. Accordingly, there is need arising to use either expensive cryogenic systems providing for separating nitrogen from products of conversion, or a unit for air preliminary separation to produce oxygen. In any case, separation of gas mixture aimed at recovering nitrogen is the most expensive stage in the process of partial oxidation.

Introduction of technology for membrane separation of air with oxygen-permeable membrane allows significant (up to 30%) reduction of energy consumption and capital cost in syngas production and hence products costs, including hydrogen.

Important advantage of membrane process is also the possibility of module design of reactor providing for easier production scale-up.

Oxygen-permeable membrane used in the process of membrane conversion is a ceramic plate or tube or a structure of other convenient form. Membrane has sufficient oxygen permeability at high temperatures typical for the process of hydrocarbon gas partial oxidation. Membrane is at the same time gas-tight, that is manufactured from nonporous material. Membranes used for air separation possess ionic or mixed electronic-ionic conductivity. In both cases ions of oxygen, driven by gradient of partial pressures, come through dense nonporous membrane at high velocity and with absolute selectivity.

Process of membrane conversion of hydrocarbon gases, in particular, methane is designed as follows: oxygen-containing gas (for example, air) is fed from one side of the membrane (e.g. from the outside of tubular membrane), hydrocarbon gas (e.g. methane) is fed from the other side (from inside of tubular membrane, respectively). When methane is used, the follow reactions take place in the space inside the membrane: CH4 + 3O2= CO2 + H2O, CH4 + CO2 - CO + H2, CH4 + H2O = CO + 3H2, in the result of which syngas is formed - mixture of hydrogen and carbon oxide (with high selectivity - up to 90%. Continuous consumption of oxygen in oxidation reaction ensures the required difference in partial pressures of oxygen at both sides of the membrane. As oxygen is transferred exclusively by ionic mechanism, the obtained syngas does not contain nitrogen.

Application of gas-tight oxygen-permeable membranes in the process of oxidative conversion of methane into syngas is a radical improvement of existing technologies for hydrocarbon conversion, resulting in improved efficiency and simplified process. Key element of this technology is a ceramic membrane which provides for oxygen transfer to the zone of reaction.

Complex oxide compounds with ionic and/or conductivity and structure of perovskites are known to the most promising materials fro manufacturing gas-tight membranes for oxygen separation from oxygen-containing mixtures, in particular, from oxygen-rich gas. For commercial applications velocities sufficient for oxygen diffusion from air or other oxygen-containing gas through such membranes are the velocities of 1.5-2.5 Nm3/m2sec.

To achieve such velocities thickness of perovskite membrane should not exceed 15-30 µm which make the membrane mechanically inadequate in practical use. To make this membrane mechanically strong for practical use it is protected from one or two sides with mechanically strong gas-permeable layer chemically or adhesively linked with the membrane. Porous ceramics or metal alloys of various compositions and various forms are usually used as such a material. Complicated structures formed in this way are called composite membranes.

Patent US 5599383 describes composite membranes comprising thin layer of dense oxygen- and electron-conductive ceramics having structure of perovskite with thickness of 0.01 to 500 µm, a layer of porous ceramic support made of material selected from a group consisting of metal oxides, such as aluminum, cerium, silicium, magnesium, titanium, high-temperature oxygen-containing alloy stabilized with zirconium, or their mixtures. To make this membrane mechanically strong it is applied over porous metallic substrate. Disadvantage of the known membranes is their insufficient strength due to difference in thermal expansion coefficients of the membrane and protecting gas-permeable layer(s).

The nearest equivalent of this invention is a composite membrane known from patent US 5935533 which consists of continuous layer of gas-tight oxide ceramics possessing ionic and/or electron conductivity, for example with the structure of perovskite, a layer of porous substrate made of high-temperature steel, containing nickel and chromium, which is located on one or both sides of ceramics, and an inter-phase zone of gradient composition (buffer layer) located between the said layers of ceramics and substrate.

Disadvantage of this technical solution is insufficient strength of membrane due to difference in thermal expansion coefficients of steel and ceramics.

Another disadvantage of the known technical solution is ambiguity of composite membrane properties related to its intermediate buffer layer with thickness of at least 5 µm which has an uncertain changing in time composition as this buffer layer is formed as the result of diffusion into ceramics of at least one element of the alloy containing nickel and chromium.

Disclosure of invention. Task the decision of which this proposed invention is aimed at is creation of a composite oxygen-permeable membrane possessing high strength and having optimum characteristics of gas-tightness and oxygen-permeability.

The task set is resolved by the fact that in the composite oxygen-permeable membrane containing continuous ceramic layer with ionic and/or electron conductivity and at least one layer of gas-permeable structure made of alloy containing elements of groups VIII and VI of Mendeleev's Periodic Table, an alloy additionally containing aluminum is used for gas-permeable layer. Making gas-permeable layer of alloy which additionally contains aluminum smoothes dereference in linear expansion coefficients and, along with this, plays a role of protecting barrier excluding diffusion of metal atoms from alloy into ceramics, which results in enhanced strength and maintaining of gas-tightness of composite oxygen-permeable membrane. In a particular case of this invention implementation the composite oxygen-permeable membrane comprises two layers: the first layers is solid and made of ceramic possessing ionic or mixed electron-ionic conductivity, and the second layer is gas-permeable and made of steel alloy containing iron and chromium B elements of groups VIII and VI of Mendeleev's Periodic Table. Application of iron and chromium improves smoothing dereference in expansion coefficients.

In another particular case of this invention implementation the layer of gas-permeable structure is made as layer holes improving the best indicators of gas-permeability of this layer.

In one more particular case of this invention implementation, holes in the layer of gas-permeable structure have the form of pores. This allows even application of the solid ceramic layer resulting in improvement of oxygen-permeability indicators of the composite membrane. In another particular case the layer of gas-permeable structure is made with holes in the form of a mesh which makes manufacturing easier.

In another particular case of this invention implementation the composite oxygen-permeable membrane comprises three layers, that is, two layers of gas-permeable structure made of alloy containing elements of groups VIII and VI of Mendeleev's Periodic Table, and a solid ceramic layer located between them, possessing ionic or mixed electron-ionic conductivity.

### Brief description of drawings.

Fig. 1 shows tubular composite membrane.
Fig. 2 shows flat (planar) composite membrane.
Fig. 3 shows diagram of unit for measuring oxygen permeability of gas-tight membranes.

Best case of the invention implementation.

Composite oxygen-permeable membrane corresponding to this invention is made by applying the first solid ceramic layer over the second gas-permeable layer made of alloy containing elements of groups VIII and VI of Mendeleev's Periodic Table, which additionally contains aluminum. Methods for applying gas-tight perovskite layer over gas-permeable layer (or substrate) are selected based on geometry of the prepared composite membrane and conditions of its application. Such known methods as pressing, deposition from solutions by sole-gel technology, chemical deposition from vapours, laser or plasma spraying, coating with centrifuging, etc. are used as methods for perovskite application.

Geometry of the membrane is determined by method of its application - membrane can be flat, tubular, corrugated, etc., respectively.

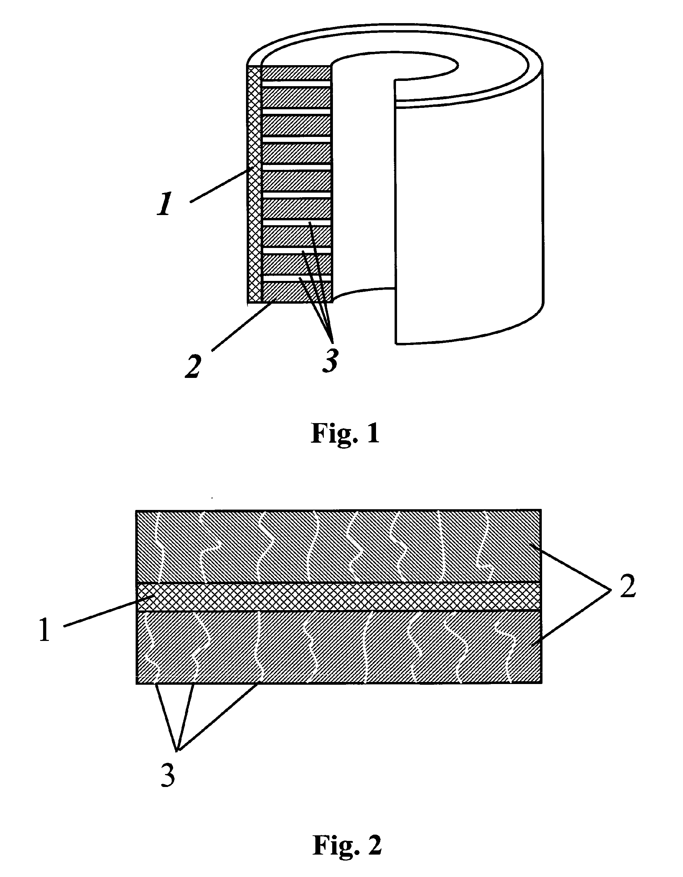

Composite oxygen-permeable membrane is made in the form of tubes (see example in Fig. 1) or in the form of plates (see example in Fig. 2). Chemical composition of protective metal porous layer(s), as well as form, sizes and pores location are selected in such a way that to avoid during heating damage of gas-tight membrane integrity due to difference in thermal expansion coefficients of the gas-tight membrane and protective gas-permeable layer(s). In this invention this is achieved by using alloy containing elements of groups VIII and VI of Mendeleev's Periodic Table and aluminum.

In a particular case of this invention implementation showed in Fig. 1, tubular composite membrane has an external layer (1), which is gas-tight oxygen- and electron-conducting ceramic membrane, and an internal layer (2), which is gas-permeable protecting metal layer with holes (3).

In the other specific case of this invention implementation (Fig. 2) a flat (or planar) composite membrane is presented, consisting of two gas-permeable protective metal layers (2) with pores (3), and gas-tight oxygen- and electron permeable ceramic membrane (1) located between metal layers.

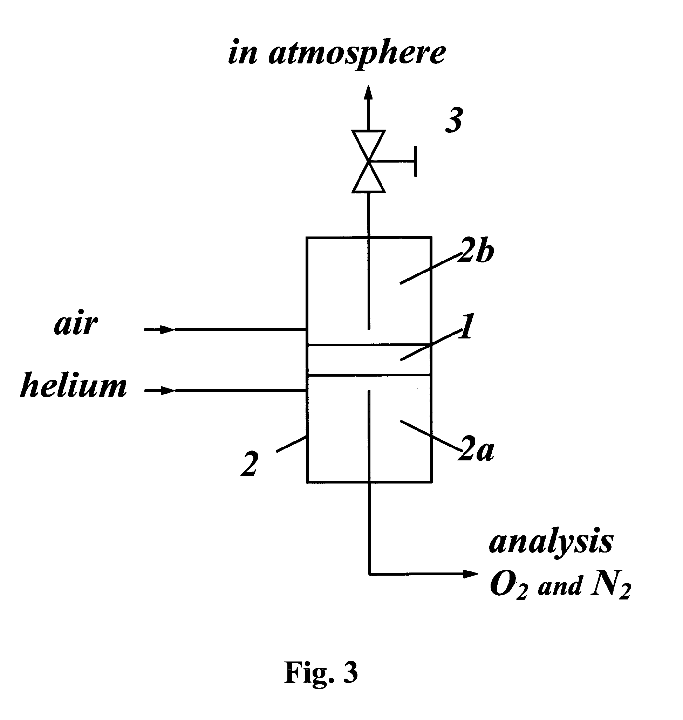

Composite membrane corresponding to this invention can be used for gas separation, in particular, oxygen-containing gases, for oxygen recovery and oxygen use in reactions of oxidative conversion of hydrocarbon gas, for example in syngas production from methane. For this purpose, in particular, the composite membrane is sealed in a conversion reactor in such a way that this membrane divides reactor space into two parts. Oxygen-containing gas is fed into one part and methane is fed into another reacting with oxygen separated from gas mixture downstream the membrane with syngas formation. To determine performance characteristics of the composite membrane, such as oxygen permeability and gas tightness, tests are carried out at the rig scheme of which is shown in Fig. 3.

Rig for oxygen permeability measurement for gas-tight membranes comprises a line for oxygen-containing gas feeding, in particular air, a line to supply helium additionally treated from oxygen traces, measuring cell (2) with two chambers (2a) and (2b) separated by membrane (1), to the first of which sir is fed, and to the second - treated helium, fine-adjustment valve (3) and systems to analyze helium downstream measuring cell (2) for oxygen and nitrogen content in the gas mixture downstream the composite membrane.

Composite membrane (1) is put into cell (2), which is a hollow metal vessel in which membrane (1) is fixed. Membrane should be fixed in such a way that it divided cell (2) into two chambers: chamber (2a) for flowing helium preliminary treated in absorber heated up to temperature 200°C with metal copper, and chamber (2b) for flowing air. With fine-adjustment valve (3) pressures on both sides of membrane (1) in cell (2) is equalized. Gas leaving chamber (2a) of cell (2) is sent to the analysis system to determine content of nitrogen and oxygen in this gas. This analysis is done with any known method, for example with chromatography or mass-spectrometry.

Implementation of this invention is illustrated with Examples below which are not intended to confine the scope of the invention specified the claims, as the results obtained do not completely exhaust the scope of the carried out researches. In particular, in this case all the Examples, except for Example 2, alloy containing iron, chromium and aluminum is used for resolution of this invention tasks.

### Example 1

Metallic foil with holes of diameter 50 µm, made of an alloy containing iron, chromium, and aluminum, is treated with organic solvent to remove mechanical impurities and/or high-boiling organic compounds from the foil surface, then it is heated during 3 hours up to the temperature of 1000°C, held at this temperature for 3 hours, cooled down to the room temperature and on the treated surface oxide composition is applied with sole-gel method, this oxide composition corresponds to the structure of perovskite by its elemental composition This sample is then heated again during 5 hours up to the temperature of 1200°C, held at this temperature for 3 hours and cooled down to the room temperature.

Composite membrane obtained in this way is put into cell to check gas tightness. Cell is heated during 2 hours up to the temperature of 850°C, held for 15 hours and cooled down to the room temperature. This operation is repeated three times with changing rates of heating and cooling down, as well as time of holding at elevated During the whole test concentration of nitrogen in helium leaving the cell did not exceed 10-5 mole fractions, which shows gas tightness of the composite membrane. At the same time concentration of oxygen in the stream changed depending on temperature from 10-5 to 10-1 mole fractions proving oxygen-permeability of the composite membrane.

### Example 2 (comparison)

Experiment results of which are presented in Example 1 is repeated, except for using alloy with no aluminum in the composition. Results of measuring concentration of nitrogen in the stream of helium leaving chamber (2a) of cell (2) (Fig. 3), indicated that the composite membrane is not gas-tight. This proves necessity of aluminum presence in the composition of metal alloy and aluminum importance in providing gas-tightness of composite membrane.

### Examples 3-7

Results of measuring concentration of nitrogen in the stream of helium leaving chamber (2a) of cell (2) (Fig. 3), indicated that the composite membrane is not gas-tight Results of gas-permeability tests of mechanically strong protective layer having holes of various forms and sizes, in particular, made in the form of porous foil or mesh are presented in the Table below.

**Table Gas-permeability research of mechanically strong protective layer**

| Example No. | Type of protective layer | Size of holes/pores, µm | Max gas conc. of O₂ downstream membrane, mole fract. |
|---|---|---|---|
| 3 | Porous foil | 0.1 | 5 × 10⁻² |
| 4 | Porous foil | 1 | 9 × 10⁻² |
| 5 | Foil with holes | 20 | 1 × 10⁻¹ |
| 6 | Mesh | 30 | 7 × 10⁻² |
| 7 | Mesh | 50 | 1 × 10⁻² |

Presented data shows that all the membranes tested as indicated in Examples 1, 3-7 are gas-tight.

Results obtained in this invention confirm the possibility of applying the composite oxygen-permeable membrane, corresponding to this invention, in reactors operating at high temperatures and pressures with the aim of improving service life of such membrane reactors, in particular, reactors for oxygen recovery from oxygen-containing gas and for reaction of hydrocarbons oxidation. Industrial application.

This invention is intended for gas separation, in particular, for separating oxygen-containing gases to recover oxygen and use it for oxidative conversion of hydrocarbon gas, in particular, for producing syngas from methane.

## Claims

1. A composite oxygen-permeable membrane containing continuous ceramic layer (1) A composite oxygen-permeable membrane containing continuous ceramic layer (2) of gas-permeable structure made of alloy containing elements of groups VIII and VI of Mendeleev's Periodic Table, wherein said alloy additionally contains aluminum.

2. The composite oxygen-permeable membrane of Claim 1 wherein said alloy contains iron and chromium as elements of groups VIII and VI, respectively.

3. The composite oxygen-permeable membrane of Claim 1 or 2 wherein said layer of gas-permeable structure has holes.

4. The composite oxygen-permeable membrane of Claim 3 wherein said layer of gas-permeable structure has pores.

5. The composite oxygen-permeable membrane of Claim 3 wherein said layer of gas-permeable structure is made meshed.

6. The composite oxygen-permeable membrane of Claim 1 or 2 wherein said membrane comprises two layers of gas-permeable structure and a solid ceramic layer located between them.

7. The composite oxygen-permeable membrane of Claim 3 wherein said membrane comprises two layers of gas-permeable structure and a solid ceramic layer located between them.

8. The composite oxygen-permeable membrane of Claim 4 wherein said membrane comprises two layers of gas-permeable structure and a solid ceramic layer located between them.

9. The composite oxygen-permeable membrane of Claim 5 wherein said membrane comprises two layers of gas-permeable structure and a solid ceramic layer located between them.
